# EUROPÄISCHE PATENTSCHRIFT

(11) **EP 0 876 940 B1**
(45) Veröffentlichungstag und Bekanntmachung des Hinweises auf die Patenterteilung: **13.09.2006**
(21) Anmeldenummer: 98108008.8
(22) Anmeldetag: 02.05.1998
(51) Int. Cl.: B60Q 1/14

(54) **Multifunktionstastschalter**
Multifunction push-button switch
Interrupteur multifonction à bouton poussoir

(30) Priorität: 05.05.1997 DE 19718979
(43) Veröffentlichungstag der Anmeldung: 11.11.1998
(60) Teilanmeldung: 06011451.9
(73) Patentinhaber: Delphi Technologies Inc., Troy, MI 48007 (US)
(72) Erfinder: Leng, Peter, 65428 Rüsselsheim (DE)
(74) Vertreter: Becker, Bernd

(56) Entgegenhaltungen:
- EP-A- 0 159 282
- EP-A- 0 822 119
- EP-A- 0 832 786
- DE-A- 4 339 095
- DE-C- 4 436 291

## Beschreibung

Die Erfindung bezieht sich auf einen Multifunktionstastschalter zur Befestigung an einem Lenkrad eines Kraftfahrzeuges, mit einem länglichen Gehäuse, in dem eine Schaltelemente aufweisende Kontakteinheit angeordnet ist, und mit mindestens einer selbsttätig rückstellenden sowie kippbar gelagerten Taste mit einem auf die Schaltelemente einwirkendem Schaltglied und einem mit zwei gegenüberliegenden Betätigungsflächen versehenen Betätigungswulst.

Aus der DE 195 11 878 A1 ist ein derartiger elektrischer Tastschalter bekannt, der mit einem Schaltelemente aufnehmenden Gehäuse und mehreren selbsttätig rückstellenden sowie außermittig gelagerten Tasten mit je einem auf die Schaltelemente einwirkenden Schaltstößel ausgerüstet ist. Jede Taste weist einen mit zwei gegenüberliegenden Betätigungsflächen versehenen Betätigungswulst auf, der annähernd achsparallel zum Tastenlager ausgerichtet ist. Die auf der Seite des Tastenlagers etwa parallel zum Gehäuse eingeleitete Betätigungskraft hat die gleiche Wirkrichtung auf die Taste wie die auf der gegenüberliegenden Seite etwa senkrecht zum Gehäuse eingeleitete Betätigungskraft. In der Regel sind zwei sich diametral gegenüberliegende Tastschalter mittels an den Stirnseiten des Gehäuses angeformten Befestigungsflanschen derart mit der Lenkradschüssel des Lenkrades eines Kraftfahrzeuges verbunden, daß die Betätigungsflächen der Tasten durch ein Blendenloch zwischen dem Lenkradkranz und der Lenkradschüssel hindurchragen. Solche elektrischen Tastschalter eignen sich besonders zum Auslösen von Schaltfunktionen, wie beispielsweise zur temporären Geschwindigkeitssteuerung (Tempomat) des Kraftfahrzeuges und/oder zur Steuerung von Betriebsfunktionen einer im Fahrzeug vorhandenen Radio-Kassetten-Einheit. Im Gehäuse des Tastschalters ist eine als Kontakteinheit ausgebildete Leiterplatte untergebracht, der eine am Gehäuse befestigte Federeinheit zugeordnet ist. Durch Betätigen einer Taste wirkt der zugehörige Schaltstößel auf die Federeinheit und verbindet oder unterbricht Strompfade auf der Leiterplatte. Die Leiterplatte selbst ist starr im Gehäuseinnenraum befestigt. Häufig werden solche Leiterplatten mit Schaltelementen, vorzugsweise mit Mikroschaltern, versehen, durch welche Schalt- und Betriebsfunktionen ausgelöst werden. Ein wesentlicher Nachteil der Tastschalter besteht in der außermittigen Lagerung der Tasten am Gehäuse und in der ungleichförmigen Ausbildung des Gehäuses, da der eine Tastschalter für die Anbringung an der linken Seite und der andere Tastschalter für die Anbringung an der rechten Seite der Lenkradschüssel vorgesehen ist. Demgemäß ist die Außenkontur des Gehäuses an diesen Bereich des Blendeloches zwischen dem Lenkradkranz und der Lenkradschüssel angepaßt, wobei hierzu die außermittige Lagerung der Tasten am Gehäuse geeignet ist. Dadurch ist die Befestigung des Tastschalters jedoch nur an der dafür vorgesehenen Seite der Lenkradschüssel möglich, so daß für einen Lenkradtyp zwei Tastschalter unterschiedlicher Ausbildung gefertigt werden müssen. Diese getrennte Herstellung ist zwangsläufig mit hohen Kosten verbunden.

Im Weiteren offenbart die den nächstliegenden Stand der Technik bildende DE 44 36 291 C1 einen Multifunktionstastschalter zur Befestigung an einem Lenkrad eines Kraftfahrzeuges, mit einem länglichen Gehäuse, in dem eine Schaltelemente aufweisende Kontakteinheit angeordnet ist, und mit mindestens einer selbsttätig rückstellenden sowie kippbar gelagerten Taste mit einem auf die Schaltelemente einwirkendem Schaltglied und einem mit zwei gegenüberliegenden Betätigungsflächen versehenen Betätigungswulst.

Es ist Aufgabe der Erfindung, einen Multifunktionstastschalter der eingangs genannten Art zu schaffen, der kostengünstig herzustellen, variabel am Lenkrad eines Kraftfahrzeuges einsetzbar und in jeder Einbaulage montierbar ist.

Erfindungsgemäß wird die Aufgabe dadurch gelöst, daß
- die Taste mittig am Gehäuse gelagert ist und einen quer zu ihrer Lagerachse symmetrischen Querschnitt aufweist, wobei die Lagerachse parallel zum Betätigungswulst verläuft, und
- das Gehäuse im Längsschnitt und im Querschnitt symmetrisch ausgebildet ist und mittig an seiner Unterseite eine sich im wesentlichen radial zur Lenksäule des Kraftfahrzeuges erstreckende Befestigungslasche aufweist.

Der im wesentlichen allseitig symmetrische Querschnitt des Gehäuses ermöglicht, in Abhängigkeit von den Montagebedingungen und dem Anwendungszweck, einerseits eine Drehung des Multifunktionstastschalters um seine lotrecht zu seiner Längsachse stehenden Hochachse vor seinem Einbau an einer Seite in die Lenkradschüssel des Lenkrades eines Kraftfahrzeuges, wobei an der Gehäuseunterseite die sich hiervon radial erstreckende Befestigungslasche zentral angebracht ist. Dadurch ist die Montage des Multifunktionstastschalters sowohl in der einen Einbaulage als auch in der um 180° um dessen Hochachse gedrehten Einbaulage möglich. Andererseits kann durch den symmetrischen Längsschnitt des Gehäuses der Multifunktionstastschalter auch um seine Längsachse oder Querachse verschwenkt und auf der einen oder anderen Seite der Lenkradschüssel montiert werden, wobei auch noch durch dessen Drehung um 180° um die Hochachse die oben beschriebene Montagevariante zur Verfügung steht. Bevorzugt ist die Anordnung der Befestigungslasche zentral an der Unterseite des Gehäuses, da hierdurch alle Dreh- bzw. Schwenkbewegungen des Multifunktionstastschalters gewährleistet werden.

Die symmetrische Querschnittsausbildung der am Gehäuse anbringbaren Tasten gestattet deren beliebiges Aufstecken oder Austauschen unter Berücksichtigung oder in Abhängigkeit von der Einbaulage des Multifunktionstastschalters und der auf den Tasten aufgebrachten Symbolik, welche die zu steuernden Schaltfunktionen versinnbildlicht. Dadurch kann ein einziger Multifunktionstastschalter hergestellt werden, der in allen Einbaulagen und an jeder Seite der Lenkradschüssel des Lenkrades eine Kraftfahrzeuges montiert werden kann. Die Fertigung eines Tastschalters getrennt für jede Seite der Lenkradschüssel entfällt dadurch, so daß Produktionskosten gespart werden.

Nach einer Weiterbildung der Erfindung weist das Gehäuse zueinander beabstandete, quer zu dessen Längsachse angeordnete Lagerlaschen auf, an denen jeweils gegenüberliegende Lagerzapfen bzw. Lagerbohrungen mittig ausgebildet sind. Um eine Taste mit den entsprechenden Lagerlaschen des Gehäuses in Eingriff bringen zu können, besitzt die Taste quer zu deren Lagerachse angeordnete Seitenflansche, die eine Lagerbohrung bzw. einen Lagerzapfen aufweisen. Dadurch wird eine beidseitige Kippbewegung der Taste um die Lagerachse erreicht, die lediglich durch die entgegengesetzt zum Betätigungswulst befindlichen Ränder der Taste begrenzt wird.

Im allgemeinen werden solche Multifunktionstastschalter und deren wesentlichen Teile aus Kunststoff durch Spritzgießtechnik hergestellt. Insofern sind die Lagerlaschen mit dem Gehäuse und die Seitenflansche der Taste zweckmäßigerweise jeweils einstückig ausgebildet, um den Herstellungsaufwand und die Herstellungskosten zu senken.

Durch die Kunststoff-Spritzgießtechnik können an dem jeweiligen Teil auf einfache Weise Funktionselemente angebracht werden, die nicht separat hergestellt werden müssen. Daher ist nach einer weiteren Ausbildung der Erfindung an der Innenseite jeder Betätigungsfläche der Taste jeweils ein Schaltglied angeformt, das sich im wesentlichen lotrecht zum zugeordneten Schaltelement auf der Kontakteinheit erstreckt.

Ferner ist bevorzugt vorgesehen, daß die Taste gegen das Gehäuse federbelastet ist. Hierzu ist an der Innenseite des Betätigungswulstes der Taste eine Rastnase angeformt. Weiterhin ist am Sockel des Gehäuses eine einen federbelasteten Rastbolzen aufnehmende Hülse ausgebildet, die zum Betätigungswulst der Taste gerichtet ist, wobei der Rastbolzen an der Rastkurve anliegt. Der federbelastete Rastbolzen unterstützt die Kippbewegung und Rückstellung der Taste relativ zum Gehäuse.

Nach einer Weiterbildung der erfindungsgemäßen Lösung ist die Kontakteinheit mittels am Gehäuse ausgebildeter Klemmelemente am Sockel des Gehäuses lösbar gehalten. Die Kontakteinheit ist damit im Gehäuse lagegesichert. Die lösbare Klemmverbindung ermöglicht aber auch eine Drehung der die Schaltelemente enthaltenden Kontakteinheit um 180°, so daß sich die Schaltelemente entweder an der einen oder anderen Längsseite des Gehäuses befinden. Je nach Einbaulage des Multifunktionstastschalters kann also die Kontakteinheit in die vorgesehene Stellung im Gehäuse ausgerichtet und dort befestigt werden.

Bevorzugt ist die Kontakteinheit als Leiterplatte ausgebildet, während die Schaltelemente der Kontakteinheit Mikroschalter, Schaltbrücken oder dergleichen sind. Besonders geeignet sind auf Grund der hohen Funktionstüchtigkeit und leichten und kostengünstigen Herstellbarkeit die Mikroschalter.

In vorteilhafter Ausgestaltung der Erfindung ist der Tastschalter derart im Bereich eines Lenkrades des Kraftfahrzeuges befestigt, daß eine den Lenkradkranz des Lenkrades umgreifende Hand mit ihrem Daumen auf die eine Betätigungsfläche der Taste und mit den Fingern auf die andere Betätigungsfläche einwirken kann. Die Hand kann sich beim Umgreifen des Lenkrades am Lenkradkranz abstützen. Das richtige Dosieren der erforderlichen Betätigungskraft ist sonach sehr leicht möglich. Analog den Möglichkeiten der natürlichen Bewegung des Daumens bzw. der Finger wird die Betätigungskraft eingeleitet, wobei bei der Betätigung des Multifunktionstastschalters der Griff um den Lenkradkranz nicht gelöst werden muß.

Um den körperlichen Gegebenheiten unter Berücksichtigung der Ausrichtung der Gelenke der Finger und des Daumens zu entsprechen, ist nach einer vorteilhaften Weiterbildung des Multifunktionstastschalters dieser derart dem Lenkradkranz zugeordnet, daß der Betätigungswulst der Taste hinter dem Lenkradkranz annähernd parallel und zurückversetzt an dem Lenkradkranz verläuft. Dies gewährleistet eine optimale Zuordnung der Taste zu den Fingern bzw. dem Daumen.

Bei einer weiteren Ausgestaltung ist das Gehäuse mittels der Befestigungslasche mit dem Lenkrad verbunden, wobei die Betätigungsflächen der Taste durch ein Blendenloch in einer die Lenkradnabe umgebenden Lenkradschüssel hindurchragen und im Bereich der Taste keine Lenkradspeichen vorgesehen sind. Wird das von den Händen geführte Lenkrad gedreht, so dreht sich die Taste mit gleichem Winkel mit. Auch in kritischen Situationen ist das Betätigen der Taste möglich, ohne die Hand vom Lenkrad zu nehmen. Darüber hinaus ist der freie Blick auf die Taste stets sichergestellt.

Weiterhin weist bevorzugt zumindest die einem Bediener zugewandte Betätigungsfläche der Taste eine transparente oder opake Symbolfläche auf, die durch ein unterhalb der Taste angeordnetes Leuchtelement beleuchtet wird. Insbesondere nachts und auch in einer Phase, in der sich ein Bediener an eine Tastenkombination gewöhnen muß, wird durch das Anzeigen und Beleuchten der Symbolfläche für die Schaltfunktionen eine Fehlbedienung ausgeschlossen. Durch Drehen oder Austauschen der Taste kann diese an der Stelle des Multifunktionstastschalters eingesetzt werden, an der die entsprechende Schaltfunktion an der Kontakteinheit vorgesehen ist, welche der Symbolik auf der Symbolfläche der Taste entspricht. Natürlich kann auch auf jeder Betätigungsfläche der Taste eine Symbolfläche angebracht werden, um die Einsatzvariationen der Taste noch zu verbessern.

Um die volle Lichtintensität auf die Symbolfläche der Taste zu lenken und deren Umgebung vor der Lichteinwirkung abzuschirmen, erstreckt sich vom Sockel des Gehäuses lotrecht zur Symbolfläche auf der Betätigungsfläche der Taste ein Streulicht abschaltender Lichtleitkanal.

Zweckmäßigerweise weist weiterhin der am Lenkrad befestigte Tastschalter zumindest drei nebeneinander angeordnete Taten auf. Somit können mehrere Schaltfunktionen an einem elektrischen Tastschalter realisiert werden. Hierbei weisen die mittlere oder die äußeren Tasten an ihren jeweils zueinander gerichteten Seitenflanschen Dichtungsbunde auf, die den Spalt zwischen den benachbarten Tasten überbrücken. Die Dichtungsbunde verhindern das Eindringen von Schmutz in den elektrischen Tastschalter. Darüber hinaus wird das ungewollte Abstrahlen von Licht verhindert, das von dem im Gehäuse vorhandenen Leuchtelement abgegeben wird.

Um den vorhandenen Platz am Lenkradkranz des Lenkrades vor allem zwischen zwei Lenkradspeichen auszunutzen und möglichst viele Schaltfunktionen realisieren zu können, sind im Bereich des Lenkrades des Kraftfahrzeuges vorzugsweise zwei sich diametral gegenüberliegende Tastschalter angeordnet. Damit können die Tasten jedes Tastschalters und die Schaltelemente der Kontakteinheit mit unterschiedlichen Schaltfunktionen belegt werden. Sonach ist es möglich, die Tasten jedes Tastschalters und die Schaltelemente der Kontakteinheit mit Schaltfunktionen zum Steuern der Fahreigenschaften des Kraftfahrzeuges bzw. zum Steuern für ein im Kraftfahrzeug befindliches Radio- und/oder Kassettenabspiel- und/oder CD-Abspiel- und/oder CD-Wechslergerät zu belegen.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines in der Zeichnung dargestellten Ausführungsbeispieles näher erläutert. Es zeigt:
- Fig. 1: eine Ansicht auf das Lenkrad eines Kraftfahrzeuges mit zwei Multifunktionstastschaltern,
- Fig. 2: einen Schnitt durch das Lenkrad gemäß Fig. 1 entlang der Linie II-II,
- Fig. 3: eine Ansicht auf das Lenkrad gemäß Fig. 1 in Richtung des Pfeiles III mit ausgebrochenem Lenkradkranz,
- Fig. 4: eine perspektivische Explosionsdarstellung auf einen erfindungsgemäßen Multifunktionstastschalter,
- Fig. 5: eine Rückansicht einer Taste des Multifunktionstastschalters.

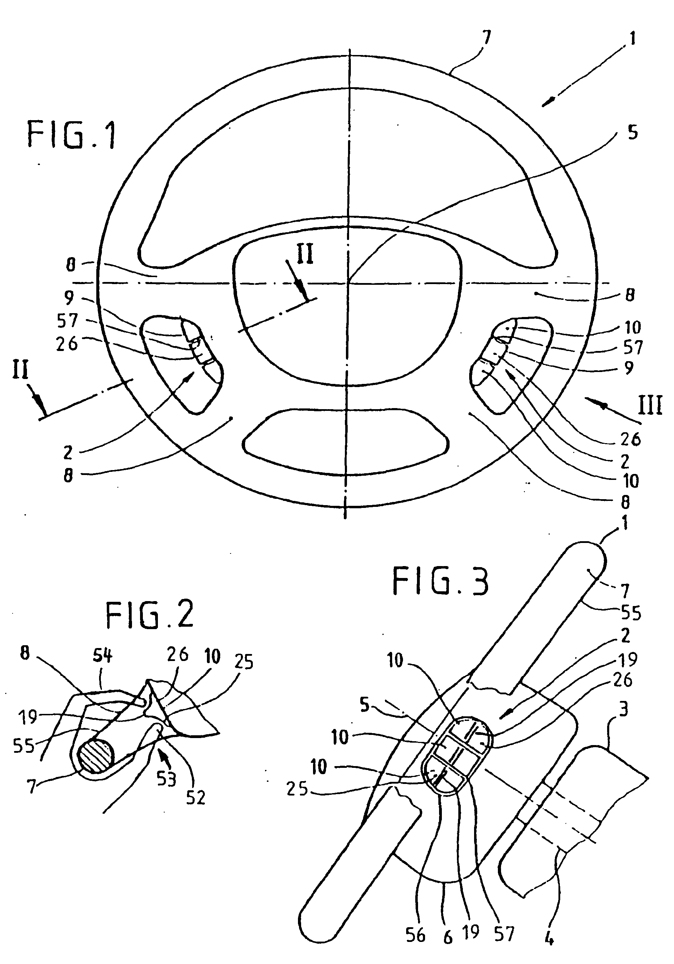

In den Fig. 1 bis 3 ist ein Lenkrad 1 dargestellt, dem eine Schaltereinheit 2 zugeordnet ist. Hinter dem Lenkrad 1 liegt ein Mantelrohr 3, in dem die Lenksäule 4 gelagert ist, an deren Ende sich das Lenkrad 1 befindet. Konzentrisch zum Lenkrad 1 ist die Lenkradnabe 5 angeordnet, die die Lenkradschüssel 6 umgibt. Die Lenkradschüssel 6 nimmt den Airbag, den Hupenkontakt und ein elektrisches Verbindungssystem auf, durch das der Kontakt vom drehenden Lenkrad 1 zum feststehenden Mantelrohr 3 übertragen wird. Das Lenkrad 1 besitzt einen Lenkradkranz 7, der über Lenkradspeichen 8 mit der die Lenkradnabe 5 umgebenen Lenkradschüssel 6 verbunden ist. Die Schaltereinheit 2, die in der Lenkradschüssel 6 angeordnet ist, besteht aus zwei Multifunktionstastschaltern 9, nachfolgend als Tastschalter bezeichnet, von denen an jeder Seite des Lenkrades 1 einer angeordnet ist. Jeder der Tastschalter 9 besitzt drei Tasten 10, die nebeneinander und vom Bediener aus sichtbar angeordnet sind.

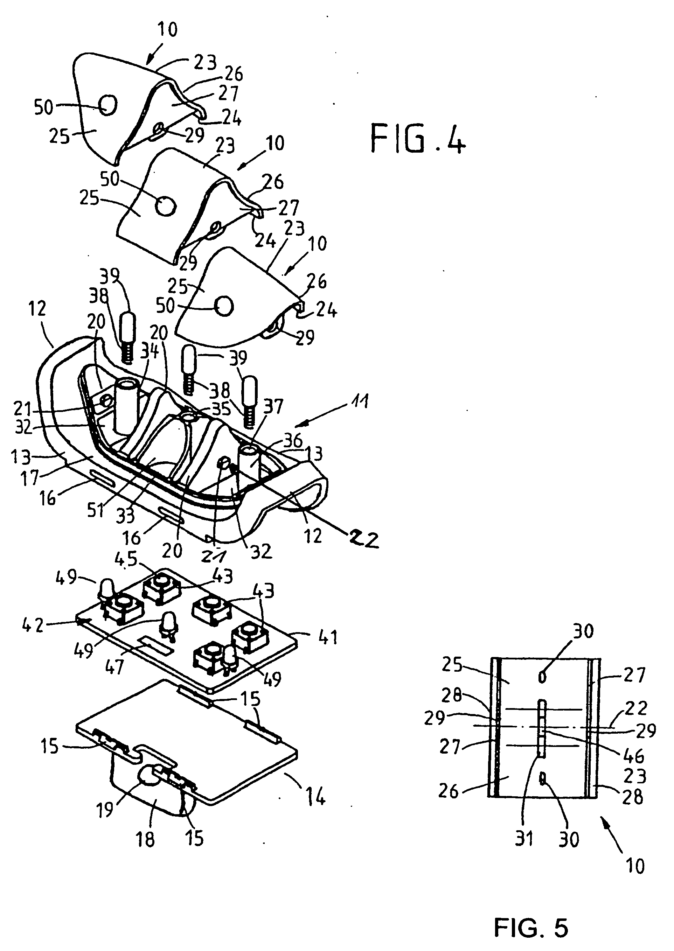

Der Tastschalter 9 weist gemäß Fig. 4 ein annähernd rechteckförmiges Gehäuse 11 mit Schmalseiten 12 und Längsseiten 13 auf. Der Rand der Längsseiten 13 und der Schmalseiten 12 des Gehäuses 11 steht erhaben über die Tasten 10 vor. Der Rand dient als Abstandssicherung zwischen einem Lenkrad-Blendenloch 56 und den Tasten 10, damit die Tasten 10 nicht durch die Lenkradnabe 5 beeinträchtigt werden. An der Unterseite des Gehäuses 11 ist eine Bodenplatte 14 vorgesehen, die an ihren seitlichen Randbereichen zueinander beabstandete Klipsnasen 15 umfaßt. Diese Klipsnasen 15 greifen in dazu korrespondierende Klipsöffnungen 16 an den Längsseiten 13 des Gehäuses 11 ein. Das Gehäuse 11 besitzt weiterhin einen Sockel 17, der etwas breiter ausgeführt ist als die Taste 10. Gemäß der Ausführungsform nach Fig. 4 sind die Schmalseiten 12 gleichmäßig aufwärts gekrümmt, so daß das Gehäuse 11 im Querschnitt und im Längsschnitt symmetrisch ausgebildet ist. Bei dem Gehäuse 11 ist eine Befestigungslasche 18 mittig an der Bodenplatte 14 angeformt und ragt von dieser weg.

Im Sockel 17 des Gehäuses 11 sind zueinander beabstandete Lagerlaschen 20 vorgesehen, die eine im wesentlichen Dreieckform besitzen. An den Seitenwänden der Lagerlaschen 20 sind Lagerzapfen 21 zur Aufnahme der Tasten 10 angespritzt, die entlang einer Lagerachse 22 fluchten.

Jede der Tasten 10 weist eine im wesentlichen dreieckförmige Querschnittsform auf. An der Oberseite jeder Taste 10 ist ein Betätigungswulst 23 ausgebildet, der annähernd achsparallel zur Lagerachse 22 ausgerichtet und zu dieser beabstandet ist. Die vom Tastenrand 24 beidseitig zum Betätigungswulst 23 verlaufenden Flächen sind die Betätigungsflächen 25 und 26. Senkrecht zur Lagerachse 22 und vom Tastenrand 24 ausgehend, ragen zu den Betätigungsflächen 25 und 26 Seitenflansche 27 hervor, welche die Seitenwände der Taste 10 bilden. Die Seitenflansche 27 sind zum Innenraum der Taste 10 hin etwas versetzt, so daß seitliche Dichtungsbunde 28 gebildet werden. Jeder Seitenflansch 27 ist mit einer Lagerbohrung 29 versehen, die sich mit dem entsprechenden Lagerzapfen 21 der Lagerlaschen 20 am Sockel 17 des Gehäuses 11 in Eingriff befindet, so daß die Taste 10 um die Lagerachse 22 betätigbar ist.

Wie insbesondere aus Fig. 5 ersichtlich ist, ist im Innenraum der Taste 10 an den Betätigungsflächen 25 und 26 jeweils ein nasenförmiges Schaltglied 30 angespritzt. Darüber hinaus ist mittig hinter dem Betätigungswulst 23 eine Rastkurve 31 angeformt.

Der Sockel 17 ist für die drei Tasten 10 in zwei äußere Sockelbereiche 32 und einen mittleren Sockelbereich 33 unterteilt. Für jede Taste 10 ragt ein in den Sockelbereichen 32 bzw. 33 hervorstehende Hülse 34, 35 und 36 mit jeweils einer Sackbohrung 37 hervor. In jede Hülse 34, 35, 36 ist ein mit einer Druckfeder 38 belasteter Rastbolzen 39 eingesetzt, wobei sich die Druckfeder 38 im Inneren der Sackbohrung 37 der Hülse 34, 35, 36 abstützt. Das vordere Endes des Rastbolzen 39 liegt an der zugehörigen Rastkurve 31 an.

In den Sockel 17 des Gehäuses 11 ist eine Kontakteinheit 40 eingesetzt, die als Leiterplatte 41 ausgebildet ist. Auf der Leiterplatte 41 sind eine Mehrzahl von Schaltelementen 42 befestigt, die als Mikroschalter 43 ausgebildet sind, wobei jeweils ein Mikroschalter 43 einer Taste 10 bzw. einer ihrer Betätigungsflächen 25 oder 26 zugeordnet ist. Die Kontakteinheit 40 wird in das Gehäuse 11 eingesetzt. Danach wird die Unterseite des Sockels 17 durch die Bodenplatte 14 derart verschlossen, daß die Klipsnasen 15 an der Bodenplatte 14 in die zugehörigen Klipsöffnungen 16 im Sockel 17 des Gehäuses 11 einrasten. Dabei kommt ein nasenförmiges Schaltglied 30 an der Rückseite einer der Betätigungsflächen 25 bzw. 26 in Anlage mit dem Schalterknopf 45 des Mikroschalters 43. Bei Betätigung der entsprechenden Betätigungsfläche 25 bzw. 26 der Taste 10 wird der zugehörige Mikroschalter 43 betätigt und löst eine Schalt- bzw. Steuerfunktion aus. Beim Loslassen der Betätigungsfläche 25 bzw. 26 der Taste 10 drückt der Schalterknopf 45 des Mikroschalters 43 gegen das Schaltglied 30, so daß die Taste 10 in ihre Ausgangsstellung zurückbewegt wird. Diese Rückbewegung wird durch den mit der Druckfeder 38 belasteten Rastbolzen 39 unterstützt, in dem die Spitze des Rastbolzens 39 gegen die Rastkurve 31 drückt. Die Rastkurve 31 weist eine zentrale Aussparung 46 auf, durch die der Rastbolzen 39 immer bestrebt ist, die Taste 10 in ihrer Ausgangsstellung zu zentrieren.

An einer Stelle 47 an der Leiterplatte 41 sind nicht sichtbare Leitungen verlötet, die über einen Ausschnitt 48 in der Bodenplatte 14 aus dem Gehäuse 11 herausführen und in einem nicht dargestellten Stecker münden. Weiterhin sind auf der Leiterplatte 41 Leuchtelemente 49 befestigt, die jeweils einer Taste 10 zugeordnet sind. Die Betätigungsflächen 25 und 26 der Taste 10 weisen eine transparente oder opake Symbolfläche 50 auf, die eine bestimmte Schalt- bzw. Steuerfunktion symbolisieren. Wird das Leuchtelement 49 aktiviert, so strahlt das Licht durch die Symbolfläche 50 in der Betätigungsfläche 25 bzw. 26 der Taste 10. Im unbeleuchteten Zustand der Taste 10 wird das Erkennen der Schalt- bzw. Steuerfunktionen durch auf den Betätigungsflächen 25 und 26 aufgebrachte, nicht dargestellte taktile Symbole ermöglicht. Den Betätigungsflächen 25 bzw. 26 zumindest der mittleren Taste 10, gegebenenfalls allen Tasten, ist ein Lichtleitkanal 51 zugeordnet, der am Sockel 17 des Gehäuses 11 ausgebildet und zur zugehörigen Symbolfläche 50 einer Betätigungsfläche 25 bzw. 26 der Taste 10 gerichtet ist. Dadurch wird die Symbolfläche 50 durch das zugehörige Leuchtelement 49 ohne Auftreten von Streulicht hinterleuchtet.

Über die Befestigungslasche 19 ist das Gehäuse 11 des Tastschalters 9 im Bereich des Lenkrades 1 derart befestigt, daß die den Lenkradkranz 7 umgreifende Hand mit ihrem Daumen 52 vor der Betätigungsfläche 25 der Taste 10 liegt und somit eine Betätigungskraft in Richtung des Pfeiles 53 in Fig. 2 eingeleitet werden kann. Die günstigste Anordnung ist dann gegeben, wenn der Betätigungswulst 23 annähernd parallel zum Lenkradkranz 7 auf der Höhe der Rückseite 55 des Lenkradkranzes 7 liegt, welche die dem Bediener abgewandte Seite des Lenkrades 1. Die andere Betätigungsfläche 26 der Taste 10 kann durch einen Finger 54 betätigt werden.

Die zwei sich diametral gegenüberliegenden Tastschalter 9 sind, wie in den Fig. 1 und 3 gezeigt, in ein in der Lenkradschüssel 6 ausgebildetes Blendenloch 56 eingesetzt. Die Kontur des Blendenloches 56 entspricht der Außenkontur des Tastschalters 9 und ist lediglich so groß, daß die Tasten 10 mit ihren Betätigungsflächen 25 und 26 und ihrem Betätigungswulst 23 dort hindurchragen und frei beweglich sind.

Die Lenkradschüssel 6 deckt auch den über die Tasten 10 hinausragenden Bereich des Gehäuses 11 ab. Die Befestigung des Tastschalters 9 am Lenkrad 1 erfolgt immer an einer Stelle, an der keine Lenkradspeichen 8 vor den Tasten 10 des Tastschalters 9 liegen. Zwischen benachbarten Tasten 10 wird ein geringfügiger Spalt 57 gebildet, um eine freie Beweglichkeit der Tasten 10 zueinander zu sichern.

Das in Fig. 1 dargestellte Lenkrad 1 besitzt insgesamt vier Lenkradspeichen 8. Der Abstand zwischen zwei Lenkradspeichen 8 ist so ausgelegt, daß die Tasten 10 des Tastenschalters 9 direkt zwischen den beiden Lenkradspeichen 8 hindurchschauen. Dadurch hat der Bediener freien Einblick auf die Tasten 10 bzw. auf deren Betätigungsflächen 25.

Jede auf den Betätigungsflächen 25 oder 26 aufgebrachte Symbolfläche bestimmt eine festgelegte Funktion, beispielsweise bezogen auf eine Radio-Kassetten-Einheit. So können den Symbolflächen der Tasten 10 z.B. die Funktionen Sender/Spur-Suchlauffunktionen, Lautstärke-/Umschaltfunktionen oder auch die Fahrtgeschwindigkeit beeinflussende Funktionen, wie sie etwa von einer Tempomat-Einrichtung am Kraftfahrzeug bekannt sind, zugeordnet werden.

### Liste der Bezugszeichen

- 1: Lenkrad
- 2: Schaltereinheit
- 3: Mantelrohr
- 4: Lenksäule
- 5: Lenkradnabe
- 6: Lenkradschüssel
- 7: Lenkradkranz
- 8: Lenkradspeiche
- 9: Tastschalter
- 10: Taste
- 11: Gehäuse
- 12: Schmalseite
- 13: Längsseite
- 14: Bodenplatte
- 15: Klipsnase
- 16: Klipsöffnung
- 17: Sockel
- 18: Befestigungslasche
- 19: Befestigungslöcher
- 20: Lagerlasche
- 21: Lagerzapfen
- 22: Lagerachse
- 23: Betätigungswulst
- 24: Tastenrand
- 25: Betätigungsfläche
- 26: Betätigungsfläche
- 27: Seitenflansch
- 28: Dichtungsbund
- 29: Lagerbohrung
- 30: Schaltglied
- 31: Rastkurve
- 32: Sockelbereich
- 33: Sockelbereich
- 34: Hülse
- 35: Hülse
- 36: Hülse
- 37: Sackbohrung
- 38: Druckfeder
- 39: Rastbolzen
- 40: Kontakteinheit
- 41: Leiterplatte
- 42: Schaltelement
- 43: Mikroschalter
- 44: Aussparung
- 45: Schalterknopf
- 46: Aussparung
- 47: Lötstelle
- 48: Ausschnitt
- 49: Leuchtelement
- 50: Symbolfläche
- 51: Lichtleitkanal
- 52: Daumen
- 53: Pfeil
- 54: Finger
- 55: Rückseite
- 56: Blendenloch
- 57: Spalt

## Patentansprüche

1. Multifunktionstastschalter zur Befestigung an einem Lenkrad (1) eines Kraftfahrzeuges mit einem länglichen Gehäuse (11), in dem eine Schaltelemente (42) aufweisende Kontakteinheit (40) angeordnet ist, und mit mindestens einer selbsttätig rückstellenden sowie kippbar gelagerten Taste (10) mit einem auf die Schaltelemente (42) einwirkendem Schaltglied (30) und einem mit zwei gegenüberliegenden Betätigungsflächen (25;26) versehenen Betätigungswulst (23), **dadurch gekennzeichnet, daß**
- die Taste (10) mittig am Gehäuse (11) gelagert ist und einen quer zu ihrer Lagerachse (22) symmetrischen Querschnitt aufweist, wobei die Lagerachse (22) parallel zum Betätigungswulst verläuft (23), und
- das Gehäuse (11) im Längsschnitt und im Querschnitt symmetrisch ausgebildet ist und mittig an seiner Unterseite (14) eine sich im wesentlichen radial zur Lenksäule (4) des Kraftfahrzeuges erstreckende Befestigungslasche (18) aufweist.

2. Multifunktionstastschalter nach Anspruch 1, **dadurch gekennzeichnet, daß** das Gehäuse (11) zueinander beabstandete, quer zu dessen Längsachse angeordnete Lagerlaschen (20) aufweist, an denen jeweils gegenüberliegende Lagerzapfen (21) bzw. Lagerbohrungen (29) mittig ausgebildet sind.

3. Multifunktionstastschalter nach Anspruch 2, **dadurch gekennzeichnet, daß** die Taste (10) quer zu deren Lagerachse (22) angeordnete, eine Lagerbohrung (29) bzw. einen Lagerzapfen (21) aufweisende Seitenflansche (27) besitzt, die sich mit dem entsprechenden Lagerzapfen (21) bzw. der Lagerbohrung (29) der Lagerlaschen (20) des Gehäuses (11) in Eingriff befinden.

4. Multifunktionstastschalter nach Anspruch 2 oder 3, **dadurch gekennzeichnet, daß** die Lagerlaschen (20) mit dem Gehäuse (11) und die Seitenflansche (27) der Taste (10) jeweils einstückig ausgebildet sind.

5. Multifunktionstastschalter nach einem der Ansprüche 1 bis 4, **dadurch gekennzeichnet, daß** jeweils ein Schaltglied (30) an der Innenseite jeder Betätigungsfläche (25;26) der Taste (10) angeformt ist, das sich im wesentlichen lotrecht zum zugeordneten Schaltelement (42) auf der Kontakteinheit (40) erstreckt.

6. Multifunktionstastschalter nach einem der Ansprüche 1 bis 5, **dadurch gekennzeichnet, daß** die Taste (10) gegen das Gehäuse (11) federbelastet ist.

7. Multifunktionstastschalter nach einem der Ansprüche 1 bis 6, **dadurch gekennzeichnet, daß** an der Innenseite des Betätigungswulstes (23) der Taste (10) eine Rastkurve(31) angeformt ist.

8. Multifunktionstastschalter nach Anspruch 7, **dadurch gekennzeichnet, daß** am Sockel (17) des Gehäuses (11) eine einen federbelasteten Rastbolzen (39) aufnehmende Hülse (34;35;36) ausgebildet ist, die zum Betätigungswulst (23) der Taste (10) gerichtet ist, wobei der Rastbolzen (29) an der Rastkurve (31) anliegt.

9. Multifunktionstastschalter nach einem der Ansprüche 1 bis 8, **dadurch gekennzeichnet, daß** die Kontakteinheit (40) mittels am Gehäuse (11) ausgebildete Klemmelemente (15;16) am Sockel (17) des Gehäuses (11) lösbar gehalten ist.

10. Multifunktionstastschalter nach einem der Ansprüche 1 bis 9, **dadurch gekennzeichnet, daß** die Kontakteinheit (40) als Leiterplatte (41) ausgebildet ist.

11. Multifunktionstastschalter nach einem der Ansprüche 1 bis 10, **dadurch gekennzeichnet, daß** die Schaltelemente (42) der Kontakteinheit (40) Mikroschalter (43), Schaltbrücken oder dergleichen sind.

12. Lenkrad mit einem Multifunktionstastschalter nach einem der Ansprüche 1 bis 11, **dadurch gekennzeichnet, daß** dieser derart im Bereich des Lenkrades (1) des Kraftfahrzeuges befestigt ist, daß eine den Lenkradkranz (7) des Lenkrades (1) umgreifende Hand mit ihrem Daumen (52) auf die eine Betätigungsfläche (25) der Taste (10) und mit den Fingern auf die andere Betätigungsfläche (26) einwirken kann.

13. Lenkrad mit einem Multifunktionstastschalter nach einem der Ansprüche 1 bis 12, **dadurch gekennzeichnet, daß** dieser derart dem Lenkradkranz (7) zugeordnet ist, daß der Betätigungswulst (23) der Taste (10) hinter dem Lenkradkranz (7) annähernd parallel und zurückversetzt an dem Lenkradkranz (7) verläuft.

14. Lenkrad mit einem Multifunktionstastschalter nach einem der Ansprüche 1 bis 13, **dadurch gekennzeichnet, daß** das Gehäuse (11) mittels der Befestigungslasche (18) mit dem Lenkrad (1) verbunden ist, wobei die Betätigungsflächen (25;26) der Taste (10) durch ein Blendenloch (56) in einer die Lenkradnabe (5) umgebenden Lenkradschüssel (6) hindurchragen und im Bereich der Taste (10) keine Lenkradspeichen (8) vorgesehen sind.

15. Multifunktionstastschalter nach einem der Ansprüche 1 bis 11, oder Lenkrad nach einem der Ansprüche 12 bis 14, **dadurch gekennzeichnet, daß** zumindest eine der Betätigungsflächen (25;26) der Taste (10) eine transparente oder opake Symbolfläche (50) aufweist, die durch ein unterhalb der Taste (10) am Sockel (17) des Gehäuses (11) angeordnetes Leuchtelement (49) beleuchtbar ist.

16. Multifunktionstastschalter oder Lenkrad nach Anspruch 15, **dadurch gekennzeichnet, daß** sich vom Sockel (17) des Gehäuses (11) lotrecht zur Symbolfläche (50) auf der Betätigungsfläche (25;26) der Taste (10) ein Streulicht abschaltender Lichtleitkanal (51) erstreckt.

17. Multifunktionstastschalter nach einem der Ansprüche 1 bis 11, 15 bis 16, oder Lenkrad nach einem der Ansprüche 12 bis 16 **dadurch gekennzeichnet, daß** der Multifunktionstastchalter zumindest drei nebeneinander angeordnete Tasten (10) umfaßt.

18. Multifunktionstastschalter nach einem der Ansprüche 1 bis 11, 15 bis 17, oder Lenkrad nach einem der Ansprüche 12 bis 17, **dadurch gekennzeichnet, daß** die mittlere oder die äußeren Tasten (10) an ihren jeweils zueinander gerichteten Seitenflanschen (27) Dichtungsbunde (28) aufweisen, die einen Spalt (57) zwischen den benachbarten Tasten (10) überbrücken.

19. Lenkrad mit einem Multifunktionstastschalter nach einem der Ansprüche 1 bis 18, **dadurch gekennzeichnet, daß** im Bereich des Lenkrades (1) des Kraftfahrzeuges zwei sich diametral gegenüberliegende Tastschalter (9) angeordnet sind.

20. Multifunktionstastschalter nach einem der Ansprüche 1 bis 11, 15 bis 18, oder Lenkrad nach einem der Ansprüche 12 bis 19, **dadurch gekennzeichnet, daß** die Tasten (10) und die Schaltelemente (42) der Kontakteinheit (40) mit unterschiedlichen Schaltfunktionen belegt sind.

21. Multifunktionstastschalter nach einem der Ansprüche 1 bis 11, 15 bis 18, 20, oder Lenkrad nach einem der Ansprüche 12 bis 20, **dadurch gekennzeichnet, daß** die Tasten (10) und die Schaltelemente (42) der Kontakteinheit (40) mit Schaltfunktionen zum Steuern der Fahreigenschaften oder zum Steuern für ein im Kraftfahrzeug befindliches Radio- und/oder Kassettenabspiel- und/oder CD-Abspiel- und/oder CD-Wechslergerät belegt sind.

22. Multifunktionsschalter nach einem der Ansprüche 1 bis 11, 15 bis 18, 20 bis 21, oder Lenkrad nach einem der Ansprüche 12 bis 21, **dadurch gekennzeichnet, daß** der Rand der Längsseiten (13) und der Schmalseiten (12) des Gehäuses (11) erhaben über den Tasten (10) vorsteht.

## Claims

1. Multi-function push-button switch for attachment to a steering wheel (1) of a motor vehicle having an elongated housing (11), in which is arranged a contact unit (40) having switch elements (42), and having at least one automatically resetting and tiltably mounted push button (10) having a switch member (30) acting on the switch elements (42) and an actuating bead (23) provided with two opposing actuating surfaces (25; 26), **characterised in that**
- the push button (10) is mounted centrally on the housing (11) and has a symmetrical cross-section transversely to its bearing axis (22), wherein the bearing axis (22) runs (23) parallel to the actuating bead, and
- the housing (11) is designed to be symmetrical in longitudinal section and in cross-section and has an attachment flap (18) extending essentially radially to the steering column (4) of the motor vehicle centrally on its underside (14).

2. Multi-function push-button switch according to claim 1, **characterised in that** the housing (11) has bearing flaps (20) arranged at a distance from one another transversely to its longitudinal axis, on which in each case opposing bearing pins (21) or bearing bores (29) are formed centrally.

3. Multi-function push-button switch according to claim 2, **characterised in that** the push button (10) has side flanges (27) arranged transversely to its bearing axis (22) and which have a bearing bore (29) or a bearing pin (21), which side flanges (27) engage with the corresponding bearing pin (21) or the bearing bore (29) of the bearing flaps (20) of the housing (11).

4. Multi-function push-button switch according to claim 2 or 3, **characterised in that** the bearing flaps (20) are designed to be in each case integral with the housing (11) and the side flanges (27) of the push button (10).

5. Multi-function push-button switch according to one of claims 1 to 4, **characterised in that** in each case a switch member (30) is moulded onto the inner side of each actuating surface (25; 26) of the push button (10), which extends essentially vertically to the assigned switch element (42) on the contact unit (40).

6. Multi-function push-button switch according to one of claims 1 to 5, **characterised in that** the push button (10) is spring-loaded against the housing (11).

7. Multi-function push-button switch according to one of claims 1 to 6, **characterised in that** a stop curve (31) is moulded onto the inner side of the actuating bead (23) of the push button (10).

8. Multi-function push-button switch according to claim 7, **characterised in that** a sleeve (34; 35; 36) receiving a spring-loaded stop bolt (39), and which is directed to the actuating bead (23) of the push button (10), is formed on the base (17) of the housing (11), wherein the stop bolt (29) rests on the stop curve (31).

9. Multi-function push-button switch according to one of claims 1 to 8, **characterised in that** the contact unit (40) is mounted releasably on the base (17) of the housing (11) by means of clamping elements (15; 16) formed on the housing (11).

10. Multi-function push-button switch according to one of claims 1 to 9, **characterised in that** the contact unit (40) is designed as a printed circuit board (41).

11. Multi-function push-button switch according to one of claims 1 to 10, **characterised in that** the switch elements (42) of the contact unit (40) are microswitches (43), switch bridges or the like.

12. Steering wheel having a multi-function push-button switch according to one of claims 1 to 11, **characterised in that** the latter is attached in the region of the steering wheel (1) of the motor vehicle such that a hand engaging around the steering wheel rim (7) of the steering wheel (1) may act with its thumb (52) on the one actuating surface (25) of the push button (10) and with the fingers on the other actuating surface (26).

13. Steering wheel having a multi-function push-button switch according to one of claims 1 to 12, **characterised in that** the latter is assigned to the steering wheel rim (7) such that the actuating bead (23) of the push button (10) runs behind the steering wheel rim (7) approximately parallel and set back on the steering wheel rim (7).

14. Steering wheel having a multi-function push-button switch according to one of claims 1 to 13, **characterised in that** the housing (11) is connected to the steering wheel (1) by means of the attachment flap (18), wherein the actuating surfaces (25; 26) of the push button (10) project through an aperture hole (56) in a steering wheel disc (6) surrounding the steering wheel hub (5) and no steering wheel spokes (8) are provided in the region of the push button (10).

15. Multi-function push-button switch according to one of claims 1 to 11, or steering wheel according to one of claims 12 to 14, **characterised in that** at least one of the actuating surfaces (25; 26) of the push button (10) has a transparent or opaque symbol surface (50), which can be illuminated by a light element (49) arranged below the push button (10) on the base (17) of the housing (11).

16. Multi-function push-button switch or steering wheel according to claim 15, **characterised in that** a light-conducting channel (51) eliminating scattered light extends from the base (17) of the housing (11) vertically to the symbol surface (50) on the actuating surface (25; 26) of the push button (10).

17. Multi-function push-button switch according to one of claims 1 to 11, 15 to 16, or steering wheel according to one of claims 12 to 16, **characterised in that** the multi-function push-button switch comprises at least three push buttons (10) arranged next to one another.

18. Multi-function push-button switch according to one of claims 1 to 11, 15 to 17, or steering wheel according to one of claims 12 to 17, **characterised in that** the central or the outer push buttons (10) have sealing collars (28) on their side flanges (27) directed towards one another in each case, which bridge a gap (57) between the adjacent push buttons (10).

19. Steering wheel having a multi-function push-button switch according to one of claims 1 to 18, **characterised in that** two diametrally opposed push button switches (9) are arranged in the region of the steering wheel (1) of the motor vehicle.

20. Multi-function push-button switch according to one of claims 1 to 11, 15 to 18, or steering wheel according to one of claims 12 to 19, **characterised in that** the push buttons (10) and the switch elements (42) of the contact unit (40) are occupied with different switch functions.

21. Multi-function push-button switch according to one of claims 1 to 11, 15 to 18, 20, or steering wheel according to one of claims 12 to 20, **characterised in that** the push buttons (10) and the switch elements (42) of the contact unit (40) are occupied with switch functions for the control of drive properties or for the control for a radio and/or cassette player and/or CD player and/or CD-changing device situated in the motor vehicle.

22. Multi-function switch according to one of claims 1 to 11, 15 to 18, 20 to 2, or steering wheel according to one of claims 12 to 21, **characterised in that** the edge of the longitudinal sides (13) and of the narrow sides (12) of the housing (11) projects raised above the push buttons (10).

## Revendications

1. Touche à effleurement multifonction destinée à être fixée à un volant (1) d'un véhicule à moteur avec un boîtier oblong (11) dans lequel une unité de contact (40) comportant des éléments de commutation (42) est disposée, et avec au moins une touche à retour automatique (10) qui est aussi logée de manière à pouvoir basculer avec un élément de déclenchement (30) agissant sur les éléments de commutation (42) et un renflement d'actionnement (23) doté de deux surfaces d'actionnement (25, 26) se faisant face, **caractérisée en ce que**
- la touche (10) est logée au milieu du boîtier (11) et comporte une section transversale symétrique perpendiculairement à son axe de palier (22), l'axe de palier étant parallèle au renflement d'actionnement (23) et
- le boîtier (11) est réalisé de manière symétrique dans les coupes longitudinale et transversale et comporte au milieu de sa face inférieure (14) une patte de fixation (18) qui s'étend sensiblement de manière radiale par rapport à la colonne de direction (4) du véhicule à moteur.

2. Touche à effleurement multifonction selon la revendication 1, **caractérisée en ce que** le boîtier (11) comporte des pattes d'appui (20) écartées les unes des autres, disposées perpendiculairement à son axe longitudinal, sur lesquelles et au milieu desquelles des tourillons (21) et/ou des alésages de palier (29) respectivement situés les uns en face des autres sont réalisés.

3. Touche à effleurement multifonction selon la revendication 2, **caractérisée en ce que** la touche (10) possède des brides latérales (27) disposées perpendiculairement à son axe de palier (22), comportant un alésage de palier (29) et/ou un tourillon (21), qui sont en prise avec le tourillon (21) correspondant et/ou avec l'alésage de palier (29) des pattes d'appui (20) du boîtier (11).

4. Touche à effleurement multifonction selon la revendication 2 ou 3, **caractérisée en ce que** les pattes d'appui (20) avec le boîtier (11) ainsi que les brides latérales (27) de la touche (10) sont respectivement réalisées d'un seul tenant.

5. Touche à effleurement multifonction selon l'une quelconque des revendications 1 à 4, **caractérisée en ce qu'**un élément de déclenchement (30) qui s'étend sensiblement verticalement par rapport à l'élément de commutation (42) affecté est formé sur la face intérieure de chaque surface d'actionnement (25, 26) de la touche (10).

6. Touche à effleurement multifonction selon l'une quelconque des revendications 1 à 5, **caractérisée en ce que** la touche (10) est équilibrée par ressort contre le boîtier (11).

7. Touche à effleurement multifonction selon l'une quelconque des revendications 1 à 6, **caractérisée en ce qu'**une courbe d'arrêt (31) est formée sur la face intérieure du renflement d'actionnement (23) de la touche (10).

8. Touche à effleurement multifonction selon la revendication 7, **caractérisée en ce qu'**une douille (34 ; 35 ; 36) accueillant un boulon d'arrêt équilibré par ressort (39) qui est dirigée vers le renflement d'actionnement (23) de la touche (10) est réalisée sur le socle (17) du boîtier (11), le boulon d'arrêt (29) étant en contact avec la courbe d'arrêt (31).

9. Touche à effleurement multifonction selon l'une quelconque des revendications 1 à 8, **caractérisée en ce que** l'unité de contact (40) est maintenue de manière amovible sur le socle (17) du boîtier (11) au moyen d'éléments de serrage (15, 16) réalisés sur le boîtier (11).

10. Touche à effleurement multifonction selon l'une quelconque des revendications 1 à 9, **caractérisée en ce que** l'unité de contact (40) est réalisée comme carte de circuits imprimés (41).

11. Touche à effleurement multifonction selon l'une quelconque des revendications 1 à 10, **caractérisée en ce que** les éléments de commutation (42) de l'unité de contact (40) sont des microrupteurs (43), des ponts de commutation ou des dispositifs semblables.

12. Volant avec une touche à effleurement multifonction selon l'une quelconque des revendications 1 à 11, **caractérisé en ce que** cette dernière est fixée dans la zone du volant (1) du véhicule à moteur de telle manière qu'une main qui entoure le bord (7) du volant (1) peut agir sur une surface d'actionnement (25) de la touche (10) avec son pouce (52) et sur l'autre surface d'actionnement (26) avec les autres doigts.

13. Volant avec une touche à effleurement multifonction selon l'une quelconque des revendications 1 à 12, **caractérisé en ce que** cette dernière est disposée au bord du volant (7) de telle manière que le renflement d'actionnement (23) de la touche (10) est presque parallèle derrière le bord de volant (7) et en retrait vers l'arrière sur le bord de volant (7).

14. Volant avec une touche à effleurement multifonction selon l'une quelconque des revendications 1 à 13, **caractérisé en ce que** le boîtier (11) est relié au volant (1) au moyen de la patte de fixation (18), les surfaces d'actionnement (25, 26) de la touche (10) dépassant dans un renfoncement de volant (6) qui entoure le moyeu de volant (5) à travers un orifice de panneau (56) et aucun rayon de volant (8) n'étant prévu dans la zone de la touche (10).

15. Touche à effleurement multifonction selon l'une quelconque des revendications 1 à 11 ou volant selon l'une quelconque des revendications 12 à 14, **caractérisé en ce qu'**au moins une des surfaces d'actionnement (25, 26) de la touche (10) comporte une surface de symboles (50) transparente ou opaque qui peut être éclairée par un élément d'éclairage (49) disposé en dessous de la touche (10) sur le socle (17) du boîtier (11).

16. Touche à effleurement multifonction ou volant selon la revendication 15, **caractérisé en ce qu'**un canal de fibres optiques (51) déconnectant la lumière parasite s'étend depuis le socle (17) du boîtier (11) verticalement par rapport à la surface de symboles (50) sur la surface d'actionnement (25, 26) de la touche (10).

17. Touche à effleurement multifonction selon l'une quelconque des revendications 1 à 11, 15 à 16, ou volant selon l'une quelconque des revendications 12 à 16, **caractérisé en ce que** la touche à effleurement multifonction comprend trois touches (10) disposées l'une à côté de l'autre.

18. Touche à effleurement multifonction selon l'une quelconque des revendications 1 à 11, 15 à 17, ou volant selon l'une quelconque des revendications 12 à 17, **caractérisé en ce que** les touches médiane ou extérieures (10) comportent sur les brides latérales (27) respectivement dirigées l'une vers l'autre des collets d'étanchéité (28) qui surmontent une fente (57) entre les touches voisines (10).

19. Volant avec une touche à effleurement multifonction selon l'une quelconque des revendications 1 à 18, **caractérisé en ce que** deux touches à effleurement (9) diamétralement opposées sont disposées dans la zone du volant (1) du véhicule à moteur.

20. Touche à effleurement multifonction selon l'une quelconque des revendications 1 à 11, 15 à 18, ou volant selon l'une quelconque des revendications 12 à 19, **caractérisé en ce que** les touches (10) et les éléments de commutation (42) de l'unité de contact (40) sont occupés par différentes fonctions de commutation.

21. Touche à effleurement multifonction selon l'une quelconque des revendications 1 à 11, 15 à 18, ou volant selon l'une quelconque des revendications 12 à 20, **caractérisé en ce que** les touches (10) et les éléments de commutation (42) de l'unité de contact (40) sont occupés par des fonctions de commutation pour commander les propriétés de conduite ou pour commander une radio et/ou un lecteur de cassettes et/ou un lecteur de CD et/ou un changeur de CD situés dans le véhicule.

22. Touche à effleurement multifonction selon l'une quelconque des revendications 1 à 11, 15 à 18, 20 ou volant selon l'une quelconque des revendications 12 à 21, **caractérisé en ce que** le bord des côtés longitudinaux (13) et les petits côtés (12) du boîtier (11) sont en saillie par rapport aux touches (10).
